Europäisches Patentamt

European Patent Office

Office européen des brevets

(11) Publication number: **0 463 279 A1**

## EUROPEAN PATENT APPLICATION

(21) Application number: **90830278.9**

(22) Date of filing: **18.06.90**

(51) Int. Cl.5: **G06M 7/02, B65B 27/10, B65G 47/14, B21B 39/00**

(43) Date of publication of application:
**02.01.92 Bulletin 92/01**

(84) Designated Contracting States:
**AT BE CH DE DK ES FR GB GR IT LI LU NL SE**

(71) Applicant: **Moscattini, Federico**
**Viale dei Patriarchi 66**
**I-33030 Basaldella Di Campoformido (UD)(IT)**

Applicant: **Roseano, Mario**
**Via della Libertà 18/2**
**I-33100 Udine(IT)**

(72) Inventor: **Moscattini, Federico**
**Viale dei Patriarchi 66**
**I-33030 Basaldella Di Campoformido (UD)(IT)**
Inventor: **Roseano, Mario**
**Via della Libertà 18/2**
**I-33100 Udine(IT)**

(74) Representative: **D'Agostini, Giovanni, Dr.**
**D'AGOSTINI ORGANIZZAZIONE n. 17 via**
**G.Giusti**
**I-33100 Udine(IT)**

(54) Method and device or plant for counting the transverse advancing bars.

(57) A method and device or plant for counting the transverse advancing bars, utilizing downwards of a transverse bars supplier (1), in a bars counter station (2) with a presence passing bar sensor means (5) in association with advancing bar accelerator means (21), to have in the counting zone (2) a spacing between the bars (b'), to facilitate the counting of the advancing bars, characterized in that said advancing bar accelerator means (21) include fixed magnetic means (22) placed under the accelerating movable surface to support the bars (b') in respective acceleration.

Fig. 1

EP 0 463 279 A1

This invention concerns a method and device or plant for counting the transverse advancing bars. The invention is particularly useful in the steel rolling plants for the bars production.

The counting bars devices have the purpose to define exactly the number of bars, (round or profiles), that will form the bundle or bound pack for the sale.

The selection of the number of bars is established in order to know exactly the weigh of the bars bundle that we will obtain.

This invention has the principal purpose to separate the bars, execute the count and stop the successive after the number chosen that will form the bundle.

The bars advance transversely in layers, but however always closed one to the other for which their count results difficult.

A known system consists in a device realized by a rotating or toothed sector that engages a headline of the bars in advancement making them to advance with greater speed, obliging them in said headline to diverge in fan shape "fan system", in such a way the bars can be counted.

This solution presents the drawback to be complicated and does not allow to have a uniform fan and the wheels or toothed sector are easily consumed and furthermore there are problems in the successive letup of the advancement for the correct recomposition of the bar bundle with tangling danger.

The more serious drawback is then that with disposition to fan, reaching the number of desired bars, it is necessary to separate them and if the bars are in the fan disposition separation will be difficult.

The count of the bars in the respective advancing stratum with one bar closed to the other is difficult and not precise. Even controlling the weight in the holdall receiving bars, does not allow a precise determination of the number of bars because the difference in tolerance of the diameter of the bars.

Purpose of the present invention is to obviate to said drawbacks.

The invention as claimed, solves the exposed problems by a method and device or plant for counting the transverse advancing bars, utilizing downwards of a transverse bars supplier, in a bars counter station with a presence passing bar sensor means in association with advancing bar accelerator means, to have in the counting zone a spacing between the bars, to facilitate the counting of the advancing bars, characterized in that said advancing bar accelerator means include fixed magnetic means placed under the accelerating movable surface to support the bars in respective acceleration.

With this solution the great advantage to avoid any mechanism or ratchet or toothing of mechanical holding is obtained, to avoid complex and expensive construction and the solution is not constrained to the section of the bars.

The accelerator means can be a series of wheels or a drum or an endless continuous belt or chain conveyor.

The magnetic means will be adjustable in their attraction force (magnetic flow) in order to regulate the attraction force to oblige each advancing bar to move in acceleration on the accelerating surface over the magnet means, being the respective force in function of the bar mass (bar section size).

The invention is better understood with the accompanying drawings showing some solutions:

Figs .1 and 2 show respectively in schematic side view and in plant view a transporter system with wheel/drum accelerator and bar counter for the formation of a bar bundle to realize e.g. a pack.

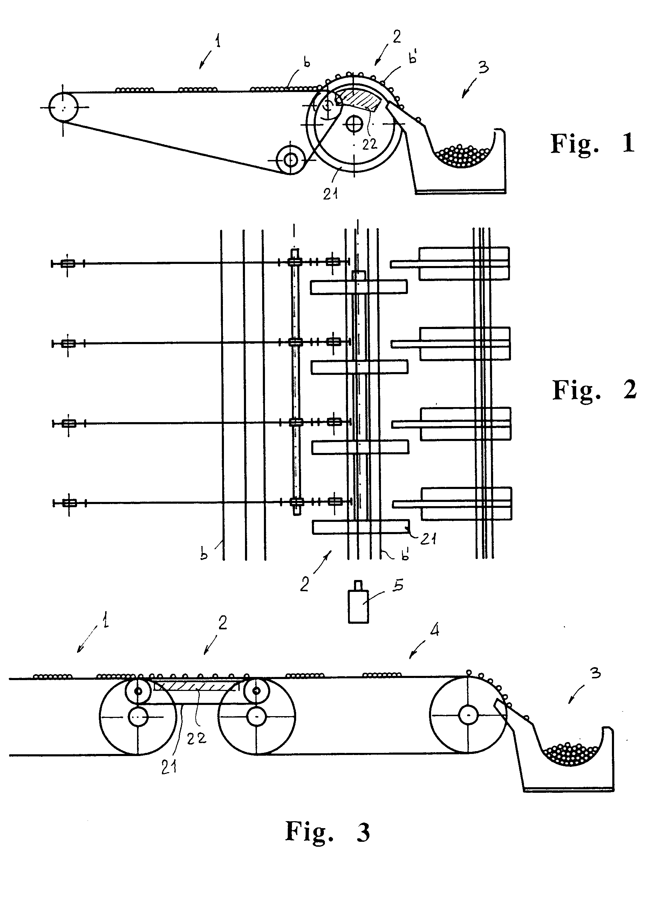

Figure. 3 shows a variant with endless continuous belt accelerator and an endless continuous belt conveyor placed between the receiving holdall bars and the accelerator.

In the Figures 1 and 2 the supply system of the bars layers (b) is indicated with 1.

Between the feeder 1 and a receiving holdall bars 3 is set the accelerator 2 of advancement bars b', realized by a rotary drum comprising a wheels plurality 21 which rotate at a peripherical speed higher than the advancement speed of the bars stratum in the upwards feeder 1.

The drum 21 is void, it includes under its rotating surface in the transferring arch a fixed magnetic sector (22).

We understand in this way that regulating the magnetic attraction flow under the drum or wheels (22) the advancing bar is obliged to attach on the rotating surface and move with it at an advancing higher speed realizing a spacing one to the other (b').

So spaced the bars can be counted easily by the sensor or detector of the advancing bars 5 , the sensor being of any kind of realization being well known in prior art, magnetic or photoelectric, mechanic, etc.

Downwards of the bar accelerating and bar counting device the bars are obliged to fall in the holdall 3 for example for the successive packaging.

As indicated in Figure 3 the drum can be substituted by a continuous endless conveyor (2) and between the accelerator 2 and the holdall 3 it is possible to provide a continuous transporter (4) reestablishing the bars stratum at the same speed of the bars supplier (1). This last solution is particularly useful for example for the successive transfer of the bars in layers or stratums of a predetermined number.

The translation speed of the accelerator can be fixed or variable.

The first bar to contact the acceleration surface is attracted and attacked on the accelerator surface for effect of the magnetic forces, that can be varied as disclosed above.

Reached the number of established bars the accelerator system stops holding the bars attacked, and simultaneously stop even the bars supplier avoiding entangling in correspondence of the accelerator 2, for example for change of the in bundle in holdall 3.

Advantageously said fixed magnetic means can be of electromagnetic type and protract for a small portion of the entire accelerating surface in the bar receiving zone, corresponding to the beginning of acceleration zone, being said magnetic means impulsed for attracting one bar after the other on the accelerating surface.

For facilitating the bar transportation, the acceleration surface of the accelerator 21 can be endowed of hollows receiving bars, or waved surface. Be noted that the acceleration surface is placed lightly at a higher level than the upwards bars supplier or bar feeder to facilitate the separation of the bars by the realization of an horizontal attraction component magneto force. The magnetic sector in the general solution extends for all the transferring acceleration arch and interferes for a sufficient portion even under the respective feeder (1);

**Claims**

1. A method and device or plant for counting the transverse advancing bars, utilizing downwards of a transverse bars supplier (1), in a bar counter station (2) with a presence passing bar sensor means (5) in association with advancing bar accelerator means (21), to have in the counting zone (2) a spacing between the bars (b'), to facilitate the counting of the advancing bars, characterized in that said advancing bar accelerator means (21) include fixed magnetic means placed under the accelerating movable surface to support the bars in respective acceleration.

2. A method, device or plant for counting bars in transverse advancement according to claim 1, characterized in that said stationary magnetic means extend also under the transportation surface of the bar supply means (1).

3. A method, device or plant for counting bars in transverse advancement according to claim 1, characterized in that said stationary magnetic means (22) under the transportation surface of acceleration (21) of said bars (b') extends for the entire transferring arch acceleration.

4. A method, device or plant for counting bars in transverse advancement according to claim 1, characterized in that said magnetic means are adjustable in their attraction force to allow attraction of at last one bar at time on the respective accelerating surface.

5. A method, device or plant for counting bars in transverse advancement according to claim 1, characterized in that said magnetic means extend for a limited portion in the bar receiving zone of the accelerator and they are pulsing electromagnetic means with a frequence at last with the corresponding advancement bars frequency in order to attract one bar at time and release it on the accelerated surface for prosecuting with further impulsions directed to the following arriving bar.

6. A method, device or plant for counting bars in transverse advancement according to claim 1, characterized in that the acceleration surface of the accelerator 21 is endowed of bar receiving hollows.

7. A method, device or plant for counting bars in transverse advancement according to claim 1, characterized in that the acceleration surface of the accelerator 21 is waved.

Fig. 1

Fig. 2

Fig. 3

European
Patent Office

EUROPEAN SEARCH
REPORT

Application Number

EP 90 83 0278

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 133 450   (DANIELI)<br>* Pages 12-22; figures * | 1,2 | G 06 M 7/02<br>B 65 B 27/10 |
| A | | 4-7 | B 65 G 47/14<br>B 21 B 39/00 |
| | – – – | | |
| Y | GB-A-1 094 978   (BOTALAM)<br>* Page 3; figure 4 * | 1-3,6,7 | |
| | – – – | | |
| Y | US-A-3 688 891   (LONG et al.)<br>* Whole document * | 1-3,6,7 | |
| | – – – | | |
| Y | EP-A-0 365 102   (CASAGRANDE)<br>* Column 3; figure * | 1,2,6,7 | |
| | – – – | | |
| Y | FR-A-1 510 975   (BOTALAM)<br>* Whole document * | 1,2,6,7 | |
| A | | 4,5 | |
| | – – – | | |
| A | JP-A-5 512 988   (SASEBO JUKOGYO)(08-10-1980)<br>* Figures<br>* & PATENT ABSTRACTS OF JAPAN, vol. 4, no. 188 (P-42)[670], 24th December 1980 | 1,6,7 | TECHNICAL FIELDS SEARCHED (Int. Cl.5) |
| | – – – | | B 21 B |
| A | DE-A-2 229 186   (JÄGER) | | B 21 F<br>B 23 Q<br>B 65 B<br>B 65 G<br>G 06 M |
| | – – – – – | | |

The present search report has been drawn up for all claims

| Place of search | Date of completion of search | Examiner |
|---|---|---|
| The Hague | 29 January 91 | ROSENBAUM H.F.J. |